# EUROPÄISCHE PATENTSCHRIFT

(11) **EP 1 903 913 B1**
(45) Veröffentlichungstag und Bekanntmachung des Hinweises auf die Patenterteilung: **09.06.2010**
(21) Anmeldenummer: 05804302.7
(22) Anmeldetag: 25.11.2005
(51) Int. Cl.: A47C 4/54, B60N 2/44

(54) **PNEUMATISCHER FAHRZEUGSITZ**
PNEUMATIC VEHICLE SEAT
SIEGE PNEUMATIQUE DE VEHICULE

(30) Priorität: 20.07.2005 CH 12022005
(43) Veröffentlichungstag der Anmeldung: 02.04.2008
(73) Patentinhaber: Prospective Concepts AG, 8152 Glattbrugg (CH)
(72) Erfinder: HABEGGER, Daniel, CH-8104 Weiningen (CH); KEREKES, Laszlo, CH-8037 Zürich (CH)
(74) Vertreter: Stump, Beat
(86) Internationale Anmeldenummer: PCT/CH2005/000699
(87) Internationale Veröffentlichungsnummer: WO 2007/009270

(56) Entgegenhaltungen:
- DE-A1- 10 027 686
- DE-A1- 10 355 519
- DE-U1- 9 112 732
- DE-U1- 20 114 598
- US-A- 5 879 053
- US-A- 5 951 111

## Beschreibung

Die vorliegende Erfindung betrifft pneumatische Sitze für Fahrzeuge, insbesondere Rücksitze für Motorfahrzeuge nach dem Oberbegriff des Patentanspruches 1. Ein gattungsgemässer Sitz ist aus der DE-U-201 14 598 bekannt. Für Fahrersitze und solche von vorne sitzenden Beifahrern sind zahlreiche pneumatische und adaptive Lösungen bekannt, wie beispielsweise aus DE 36 90 372. Die Rücksitze von Motorfahrzeugen, die auch meistens abklappbar ausgeführt werden, sind jedoch hinsichtlich pneumatischer Polsterung wenig bearbeitet worden. Die bekannten Lösungen für Fahrersitze eignen sich auch in aller Regel wenig für Rücksitze wegen ihrer ausgesprochenen Konturierung.

Die Aufgabe, welche bei Rücksitzen gelöst werden soll, besteht bei der Schaffung einer pneumatischen Ausrüstung insbesondere darin, sowohl die Sitzfläche als auch die Rücklehne und weitere gepolsterte Stellen so zu gestalten, dass nachdem Entlüften der die Polsterung bildenden Luftkissen, für das und nach dem Abklappen der Rücklehne eine flache, niedrig bauende und möglichst ebene Struktur entsteht. Ferner besteht die Aufgabe darin, die Rücksitze so zu gestalten, dass diese Fahrgäste unterschiedlicher Körpergestalt adaptieren können. Die Lösung der gestellten Aufgabe ist wiedergegeben im kennzeichnenden Teil des Anspruches 1 hinsichtlich der wesentlichen Merkmale und in den folgenden Ansprüchen hinsichtlich weiterer vorteilhafter Ausgestaltungen.

In der beigefügten Zeichnung ist die Erfindung anhand mehrerer Ausführungsbeispiele näher ausgeführt. Es zeigen
- Fig. 1: einen Vertikalschnitt quer zur Fahrzeugrichtung durch ein erstes Ausführungsbeispiel eines Rück- sitzes,
- Fig. 2: einen Horizontal-Schnitt quer zur Fahrzeugrichtung durch ein erstes Ausführungsbeispiel einer Rücken- lehne,
- Fig. 3: einen Vertikal-Schnitt in Fahrzeugrichtung durch ein Detail eines Rücksitzes,
- Fig. 4: einen Horizontal-Schnitt durch ein zweites Aus- führungsbeispiel einer Rückenlehne,
- Fig. 5: einen Horizontal-Schnitt durch ein drittes Aus- führungsbeispiel einer Rückenlehne.

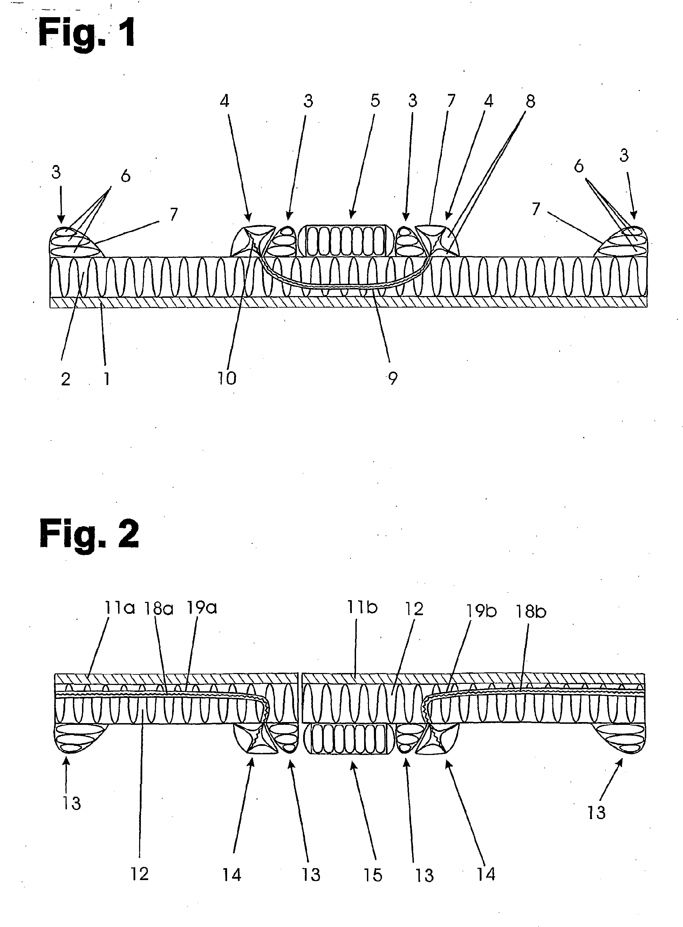

In Fig. 1 ist ein erstes Ausführungsbeispiel eines erfindungsgemässen Fahrzeugsitzes dargestellt. Fahrzeug-Rücksitze sind - je nach Hersteller und Modell - stark verschieden aufgebaut. Je nach Hersteller und Modell beruht der mechanische Aufbau eines Rücksitzes auf einer ebenen Grundplatte oder kann auch sehr stark konturiert aufgebaut sein..Mit der vorliegenden Erfindung können - mit geeigneter Anpassung - solche unterschiedlichen Aufbauten berücksichtigt werden. Fig. 1 zeigt also die Rücksitzbank eines Fahrzeugmodells, welches über eine ebene Grundplatte 1 verfügt. Im Folgenden werden unter Grundplatte 1 auch solche konturierten Ausführungen verstanden. In Fig. 1 ist diese Grundplatte 1 mit einer Lage 2 Schaumstoff überzogen, welcher in der Regel auf die Grundplatte 1 aufgeklebt ist. Auf dieser Lage 2 sind mehrere, nun pneumatische Kissen, angeordnet und damit in geeigneter Weise verbunden. Nicht dargestellt ist der textile Überzug und eine allenfalls zwischen diesen und der Lage 2 und den Kissen eingelegte Schaumstoff-Schicht. Als pneumatische Kissen sind hier vorgesehen: Randkissen 3, Seitenkissen 4 und ein Sitzkissen. Die Randkissen 3 sind beispielsweise aus mehreren aufeinander geschichteten Blasen 6 in einem textilen Überzug 7 gefertigt; die Seitenkissen bestehen aus beispielsweise vier Blasen 8, welche an den Längsseiten miteinander verbunden sind und ebenfalls mit einem textilen Überzug versehen sind. Diese textilen Überzüge 7 sind vorzugsweise aus einem Gewebe mit kleiner Dehnbarkeit gefertigt. Das Sitzkissen ist ein an sich bekanntes pneumatisches Kissen 5 mit Stegen, beispielsweise ein sogenanntes Webkissen. Die beiden hier dargestellten Seitenkissen 4 sind über ein Rohr 9 miteinander verbunden, in welches ein Federelement 10 eingelegt ist. Dieses Federelement 10, beispielsweise ein Gummizug, bewirkt ein rasches Entlüften der Seitenkissen 4. Anstelle der Lage 2 aus Schaumstoff kann auch auf der ganzen Sitzbreite ein ebenes, beispielsweise ein sogenanntes Webkissen, eingesetzt werden. Das Sitzkissen wird dann auf dieses aufgelegt und darauf befestigt. Wenn die pneumatischen Kissen 3, 4, 5 entlüftet sind, ist die Lage 2 im dargestellten Ausführungsbeispiel eben.

Fig. 2 ist die Darstellung der Rückenlehne im analogen Querschnitt wie Fig. 1. Die Rückenlehne besteht aus einer ersten Rückenplatte 11a, welche etwa 1/3 der Breite einnimmt, und einer zweiten Rückenplatte 11b. Die zwei Rückenplatten 11a, b bilden zusammen die Rückenplatte 11. Die Ausstattung der Rükkenlehne mit Schaumstoff in einer Lage 12, pneumatischem Randkissen 13, Seitenkissen 14 und Lehnkissen 15, entspricht im Wesentlichen jener des Sitzes. Bedingt durch die 1/3 - 2/3 - Teilung der Rückenplatte 11 ist das dem Rohr 9 des Sitzes entsprechende aufgeteilt in zwei Rohre 19a, 19b, ebenso die eingelegten Federelemente 18a, b, welche ihre Zugkraft in geeigneter Weise an die Rückenplatten 11a, b ableiten. Wiederum kann die Lage 12 aus Schaumstoff ersetzt werden durch ein Webkissen der bekannten Art.

Sind die pneumatischen Kissen 3, 4, 5, 13, 14, 15 ganz oder teilweise entlüftet, so kann die Rücklehne als Ganzes nach vorne geklappt werden. Soll nur die Rückenplatte 11a - entsprechend 1/3 der ganzen Sitzbreite - nach vorne geklappt werden, so genügt es, die pneumatischen Kissen 3, 4 und die pneumatischen Kissen 3, 4 der Rückenlehne auf der gleichen Seite zu entlüften. Hierfür sind nicht dargestellte Ventile vorhanden und allenfalls durch eine entsprechende Steuerung gesamthaft betätigt.

Soll der beschriebene Rücksitz nur von zwei Personen genutzt werden, oder keine Mittelablage, durch das Sitzkissen 5 gebildet, aufweisen, so können die in der Mitte liegenden Randkissen 3, die Seitenkissen 4 und das Sitzkissen 5 entlüftet werden.

Sowohl Grundplatte 1 als auch Rückenlehne 11 können für die Auflage und Befestigung von Lage 2 aus Schaumstoff oder pneumatischen Kissen aufgebaut sein aus Metall, Kunststoff, textilem Material, Gittern, Geflechten oder Kombinationen hiervon. Ebenso kann die Grundplatte 1 und die Rückenlehne für die Halterung, die Ergonomie und/oder die Befestigung der pneumatischen Kissen, des Schaumstoffes und der textilen Ueberzüge in geeigneter Art ausgeformt sein.

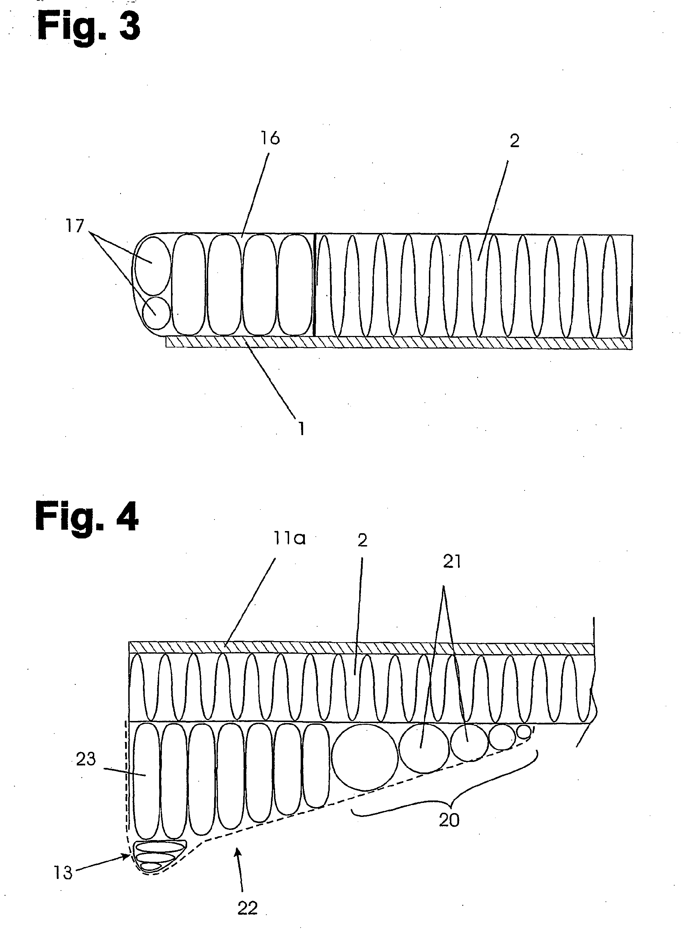

Fig. 3 als Längsschnitt in Fahrtrichtung durch die Sitzbank zeigt eine Variante hierzu. Die Grundplatte 1 trägt die Lage 2, welche hier nicht die ganze Tiefe der Sitzbank bedeckt. Im Kniebereich des Fahrgastes ist die Lage 2 durch ein Webkissen 16 ersetzt, welches an der Vorderkante noch zwei Luftadern 17 aufgesetzt und geeignet befestigt trägt. Diese Luftadern 17 können auch unterschiedlich ausgebildet sein, wie dargestellt. Damit kann Design-Ansprüchen weitgehend entsprochen werden. Beim Abklappen der Rückenplatte 11 sind die Gurtrollen, welche beispielsweise an der Rückenplatte 11 befestigt sind, oft so weit vorstehend, dass die Rückenplatte 11 nicht im Wesentlichen eben liegen wird. Wird hingegen im Bereich dieser Gurtrollen die Lage 2 durch die pneumatischen Kissen 16, 17 ersetzt, so lassen sich die genannten Gurtrollen in die Vertiefung einklappen, welche beim Entlüften dieser genannten Kissen 16, 17 entstehen wird.

Fig. 4 zeigt den Teil des Rücksitzes im Bereich der gesondert abklappbaren ersten Rückenplatte 11a. Wiederum ist die Rükkenplatte 11a durch eine Lage 2 aus Schaumstoff mit einer Grundpolsterung versehen. Auf dieser aufgelegt und geeignet befestigt ist ein beispielsweise zweiteilig ausgeführtes pneumatisches Kissen, bestehend aus einem ersten Teil 20 aus Luftadern 21 und einem zweiten Teil 22 aus einem Webkissen 23. Das Randkissen 13 ist dann auf dem Webkissen 23 befestigt.

Die zweite Rückenplatte 11b ist hier nicht dargestellt, ist jedoch - spiegelbildlich - gleich ausgestattet. Ist der Rücksitz mit drei Personen besetzt, so bewirkt diese, in Fig. 1, 2, 4 gezeigte Ausstattung im mit Druckluft beaufschlagten Zustande, dass die mittig sitzende Person etwas höher und etwas weiter vorne sitzen wird, als die aussen sitzenden. Diese hingegen werden, durch die Anordnung der in Fig. 4 dargestellten Kissenkonfiguration, etwas eingedreht sitzen. Dadurch wird verhindert, dass die drei Personen einander im Schulterbereich berühren und einengen.

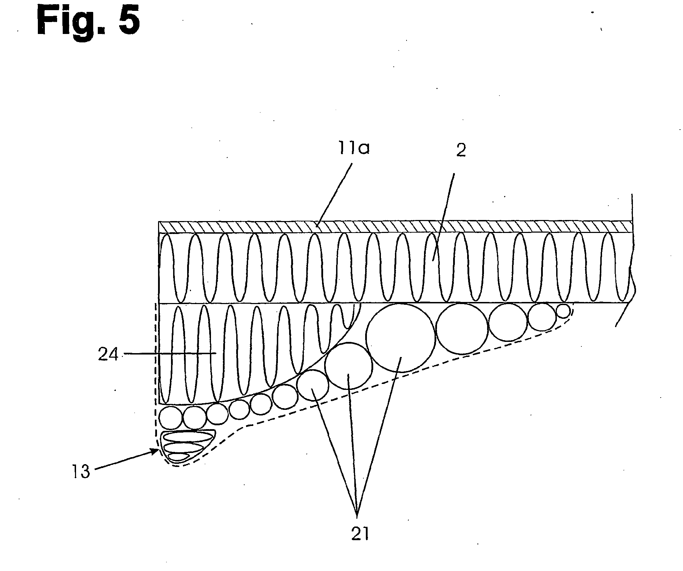

In Fig. 5 ist ein drittes Ausführungsbeispiel der pneumatischen Ausstattung des Rücksitzes dargestellt in der Fig. 4 entsprechenden Ansicht. Der Aufbau von Rückenplatte 11a und Lage 2 ist gleich, wie zu Fig. 4 beschrieben. Auf die Lage 2 aufgelegt und an ihr geeignet befestigt ist eine weitere, nun konturierte Lage 24 aus Schaumstoff. Diese ist überzogen mit einem Kissen 25, welches vorzugsweise aus Luftadern 21 gefertigt ist. Diese Luftadern 21 sind - entsprechend jenen von Fig. 4 - in ihren Grössen so gefertigt, dass im mit Druckluft beaufschlagten Zustande die dargestellte Kontur entsteht. Auch in diesem Ausführungsbeispiel ist das Randkissen 13 auf das Kissen 25 aufgelegt und darauf geeignet befestigt.

Nicht dargestellt, aus dem bisher Gezeigten und Gesagten jedoch leicht ableitbar, ist folgende Ausführungsvariante. Sind die Dimensionen des Fahrzeugsitzes so, dass die Rückenplatten 11a, b je eine Ausbuchtung für die hinteren Radkästen aufweisen, so kann die Lage 24 auf diese Ausbuchtung aufgelegt sein. Die pneumatische Ausstattung bleibt alsdann, wie in Fig. 5 gezeigt. Selbstverständlich ist es möglich, das Ausführungsbeispiel von Fig. 4 und jenes von Fig. 5 durch ein Seitenkissen 13 gemäss Fig. 2 zu ergänzen.

## Patentansprüche

1. Pneumatischer Rücksitz für Motorfahrzeuge mit pneumatischen Sitzpolstern wobei:
- die Sitzbank aufgebaut ist aus einer Grundplatte (1) und einer Lage (2) aus Schaumstoff oder einem pneumatischen Kissen,
- die Rückenlehne gleichartig aufgebaut ist aus einer Rückenplatte (11) und einer entsprechende Lage (12) aus Schaumstoff oder einem pneumatischen Kissen,
- die Sitzbank auf die Lage (2) aufgelegt und auf dieser geeignet befestigt je ein jeweils links und rechts der aussen sitzenden Fahrgäste angeordnetes pneumatisches Randkissen (3) trägt,
- die Rückenlehne auf die Lage (12) aufgelegt, und auf dieser geeignet befestigt, pneumatische Kissen trägt,
**dadurch gekennzeichnet, dass**
die Sitzbank auf die Lage (2) aufgelegt und auf dieser geeignet befestigt ein pneumatische Kissen (5) trägt, welches als Mittelablage verwendbar ist.

2. Pneumatischer Rücksitz gemäss Patentanspruch 1, **dadurch gekennzeichnet, dass** die Rückenlehne folgende pneumatischen Kissen trägt:
- je ein jeweils links und rechts der aussen sitzenden Fahrgäste angeordnetes Randkissen (13),
- ein Lehnkissen (15),
wobei nach dem ganzen oder teilweisen Entlüften der pneumatischen Kissen, welche ein Abklappen der Rückenlehne (11a, b) behindern, sowohl Rücksitz als auch Rükkenlehne (11a, b) im Wesentlichen eben sind, und die Rückenlehne (11a, b) im Wesentlichen in die Horizontale auf den Rücksitz abgeklappt werden kann.

3. Pneumatischer Rücksitz gemäss Patentanspruch 1 oder 2, **dadurch gekennzeichnet, dass**
- die Sitzbank, anschliessend an das Kissen (5) und die zwei je links und rechts der aussen sitzenden Fahrgäste angeordneten Randkissen (3) an diese Randkissen (3) seitlich anschliessend, je ein Seitenkissen (4) auf die Lage (2) aufgelegt und darauf geeignet befestigt trägt,
- die Rückenlehne, anschliessend an das Lehnkissen (15) und die zwei links und rechts der aussen sitzenden Fahrgäste angeordneten Randkissen (13), an diese seitlich anschliessend, je ein Seitenkissen (14) auf die Lage (12) aufgelegt und darauf geeignet befestigt trägt.

4. Pneumatischer Rücksitz gemäss Patentanspruch 3, **dadurch gekennzeichnet, dass** die Rückenplatte etwa zu 1/3 in eine erste Rückenplatte (11a) und zu etwa 2/3 in eine zweite Rückenplatte (11b) unterteilt ist, welche je einzeln nach dem Entlüften der zugehörigen pneumatischen Kissen abgeklappt werden können.

5. Pneumatischer Rücksitz gemäss Patentanspruch 4, **dadurch gekennzeichnet, dass**
- die zwei Seitenkissen (4) verbunden sind durch ein Federelement (10), welches ebenfalls zwischen den zwei Seitenkissen (4) verläuft und in ein Rohr (9) eingelegt ist,
- jedes Seitenkissen (14) mittels eines Federelementes (18a,b) mit je einem Teil der Rückenplatte (11) verbunden ist, und die Federelemente (18a, b) in je ein Rohr (19a,b) eingelegt sind.

6. Pneumatischer Rücksitz gemäss Patentanspruch 3, **dadurch gekennzeichnet, dass** eine pneumatische Ventilsteuerung vorhanden ist, welche gestattet, dass die pneumatischen Kissen je einzeln angesteuert und über diese Ventilsteuerungen einzeln druckbeaufschlagt und entlüftet werden können.

7. Pneumatischer Rücksitz gemäss Patentanspruch 3, **dadurch gekennzeichnet, dass** die Lage (12) der Rückenlehne einen ersten Teil (20) und einen zweiten Teil (22) eines Pneumatischen Kissens aufgelegt und geeignet darauf befestigt trägt, wobei der erste Teil (20) aus im Wesentlichen vertikal verlaufenden Luftadern (21) und der zweite Teil (22) aus einem Webkissen (23) besteht, und diese genannten pneumatischen Kissen (20, 22) eine nach vorne und aussen ansteigende Kontur bewirken, dergestalt, dass der daran anlehnende Fahrgast nach innen eingedreht sitzen kann.

8. Pneumatischer Rücksitz gemäss Patentanspruch 7, **dadurch gekennzeichnet, dass** das Randkissen (13) auf das Webkissen (23) aufgelegt und daran geeignet befestigt ist.

9. Pneumatischer Rücksitz gemäss Patentanspruch 1 oder 2, **dadurch gekennzeichnet, dass** die Rückenplatte (11) entweder im Bereich der Radkästen konturiert ausgeführt ist, und/oder eine konturierte Lage (24) aus Schaumstoff oder ein gleichermassen konturiertes Webkissen trägt, auf welche ein Kissen aus Luftadern (21) aufgelegt und geeignet befestigt ist, und dieses genannte Kissen nach vorne und aussen ansteigende Kontur bewirken, dergestalt, dass der daran anlehnende Fahrgast nach innen eingedreht sitzen kann.

10. Pneumatischer Rücksitz gemäss Patentanspruch 9, **dadurch gekennzeichnet, dass** das Randkissen (13) auf das Webkissen (23) aufgelegt und daran geeignet befestigt ist.

11. Pneumatischer Rücksitz nach einem der vorangehenden Ansprüche, **dadurch gekennzeichnet, dass** die Lage (2) aus Schaumstoff des Rücksitzes im Kniebereich eines Fahrgasts ersetzt ist durch ein pneumatisches Kissen durch ein Webkissen (16), welches zur Konturierung der Vorderkante des Rücksitzes horizontal verlaufende Luftadern (17) aufgelegt und geeignet befestigt aufweist, so dass an der Rükkenplatte (11) befestigte Gurtrollen nach dem Entlüften von Webkissen (16) und Luftadern (17) in die durch das genannte Entlüften entstehende Lücken passen, und die Rückenplatte (11) ganz abgeklappt werden kann.

12. Pneumatischer Rücksitz gemäss Patentanspruch 1, **dadurch gekennzeichnet, dass** sowohl Grundplatte (1) als auch Rükkenlehne (11) für die Auflage und Befestigung von Lage (2) aus Schaumstoff oder pneumatischen Kissen bestehen können aus Metall, Kunststoff, textilem Material, Gittern, Geflechten oder Kombinationen hiervon, und dass die Grundplatte (1) und die Rückenlehne (11) für die Halterung, die Ergonomie und/oder die Befestigung der pneumatischen Kissen, des Schaumstoffes und von textilen Ueberzügen in geeigneter Art ausgeformt sein können.

## Claims

1. A pneumatic back seat for motor vehicles with pneumatic seat cushions, wherein:
- the seat bench is constructed from a base plate (1) and a layer (2) of foam or a pneumatic cushion,
- the backrest is identically constructed from a back plate (11) and a corresponding layer (12) of foam or of a pneumatic cushion,
- the seat bench, placed on the layer (2) and suitably fastened thereon, carries in each case a pneumatic marginal cushion (3) arranged respectively to the left and right of the passengers sitting on the outside,
- the backrest, placed onto the layer (12) and suitably fastened thereon, carries pneumatic cushions,
**characterized in that**
the seat bench, placed onto the layer (2) and suitably fastened thereon, carries a pneumatic cushion (5) which is able to be used as a centre tray.

2. The pneumatic back seat according to Claim 1, **characterized in that** the backrest carries the following pneumatic cushions:
- in each case a marginal cushion (13) arranged respectively to the left and right of the passengers sitting on the outside,
- a reclining cushion (15),
wherein after the complete or partial evacuating of air from the pneumatic cushions, which prevent a folding-down of the backrest (11a, b), both the back seat and also the backrest (11a, b) are substantially flat and the backrest (11a, b) can be substantially folded down into the horizontal onto the back seat.

3. The pneumatic back seat according to Claim 1 or 2, **characterized in that**
- the seat bench adjoining the cushion (5) and the two marginal cushions (3) arranged in each case to the left and right of the passengers sitting on the outside, laterally adjoining these marginal cushions (3) in each case carries a side cushion (4) placed onto the layer (2) and suitably fastened thereon,
- the backrest, adjoining the reclining cushion (15) and the two marginal cushions (13), arranged to the left and right of the passengers sitting on the outside, laterally adjoining these, in each case carries a lateral cushion (14) placed onto the layer (12) and suitably fastened thereon.

4. The pneumatic back seat according to Claim 3, **characterized in that** the back plate is divided approximately at 1/3 into a first back plate (11a) and at approximately 2/3 into a second back plate (11b), which can each be individually folded down after the evacuation of air from the associated pneumatic cushions.

5. The pneumatic back seat according to Claim 4, **characterized in that**
- the two side cushions (4) are connected by a spring element (10) which likewise runs between the two side cushions (4) and is inserted into a tube (9),
- each side cushion (14) is connected by means of a spring element (18 a, b) with in each case a part of the back plate (11), and the spring elements (18 a, b) are inserted in each case into a tube (19 a, b).

6. The pneumatic back seat according to Claim 3, **characterized in that** a pneumatic valve control is present, which allows the pneumatic cushions to each be activated individually and to be able to be acted upon by pressure and to have the air evacuated therefrom individually via these valve controls.

7. The pneumatic back seat according to Claim 3, **characterized in that** the layer (12) of the backrest carries a first part (20) and a second part (22) of a pneumatic cushion, placed and suitably fastened thereon, wherein the first part (20) consists of substantially vertically oriented air cores (21), and the second part (22) consists of a web cushion (23), and these said pneumatic cushions (20, 22) bring about a rising contour towards the front and towards the outside, such that the passenger leaning thereon can sit turned in towards the inside.

8. The pneumatic back seat according to Claim 7, **characterized in that** the marginal cushion (13) is placed onto the web cushion (23) and is suitably fastened thereon.

9. The pneumatic back seat according to Claim 1 or 2, **characterized in that** the back plate (11) is embodied either so as to be contoured in the region of the wheel houses, and/or carries a contoured layer (24) of foam or a likewise contoured web cushion, onto which a cushion of air cores (21) is placed and suitably fastened, and this said cushion brings about a rising contour towards the front and towards the outside, such that the passenger leaning thereon can sit turned in towards the inside.

10. The pneumatic back seat according to Claim 9, **characterized in that** the marginal cushion (13) is placed onto the web cushion (23) and is suitably fastened thereon.

11. The pneumatic back seat according to one of the preceding claims, **characterized in that** the layer (2) of foam of the back seat is replaced in the knee region of a passenger by a pneumatic cushion by a web cushion (16), which for contouring the front edge of the back seat has horizontally oriented air cores (17) placed and suitably fastened, so that belt reels fastened on the back plate (11) , after the evacuation of air from the web cushion (16) and air cores (17), fit into the gaps occurring through the said evacuation of air, and the back plate (11) can be fully folded down.

12. The pneumatic back seat according to Claim 1, **characterized in that** both the base plate (1) and also the backrest (11) for the placement and fastening of the layer (2) of foam or pneumatic cushions can consist of metal, plastic, textile material, lattices, mesh or combinations hereof, and that the base plate (1) and the backrest (11) can be formed in a suitable manner for holding, ergonomics and/or fastening of the pneumatic cushions, the foam and textile coverings.

## Revendications

1. Siège arrière pneumatique pour véhicules automobiles comprenant des rembourrages de siège pneumatiques, dans lequel :
la banquette est composée d'un plateau de base (1) et d'une couche (2) de mousse ou d'un coussin pneumatique,
le dossier est composé de la même manière d'un panneau arrière (11) et d'une couche correspondante (12) de mousse ou d'un coussin pneumatique,
la banquette est placée sur la couche (2) et, fixée sur celle-ci de manière appropriée, porte un coussin de bord pneumatique (3) disposé respectivement à gauche et à droite des passagers assis en dehors,
le dossier est placé sur la couche (12) et, fixé sur celle-ci de manière appropriée, porte des coussins pneumatiques,
**caractérisé en ce que** la banquette est placée sur la couche (2) et, fixée sur celle-ci de manière appropriée, porte un coussin pneumatique (5) qui peut être utilisé comme rangement central.

2. Siège arrière pneumatique selon la revendication 1, **caractérisé en ce que** le dossier porte les coussins pneumatiques suivants :
un coussin de bord (13) disposé respectivement à gauche et à droite des passagers assis en dehors,
un coussin d'appui (15),
sachant qu'après le dégonflage total ou partiel des coussins pneumatiques, qui empêchent que le dossier (11a, b) ne se rabatte, à la fois le siège arrière et le dossier (11a, b) sont essentiellement plats, et le dossier (11a, b) peut être rabattu essentiellement à l'horizontale sur le siège arrière.

3. Siège arrière pneumatique selon la revendication 1 ou 2, **caractérisé en ce que**
la banquette en se raccordant au coussin (5) et se raccordant latéralement aux deux coussins de bord (3) disposés respectivement à gauche et à droite des passagers assis en dehors, porte respectivement un coussin latéral (4) placé sur la couche (2) et fixé dessus de manière appropriée,
le siège arrière en se raccordant au coussin d'appui (15) et se raccordant latéralement aux deux coussins de bord (13) disposés respectivement à gauche et à droite des passagers assis en dehors, porte respectivement un coussin latéral (14) placé sur la couche (12) et fixé dessus de manière appropriée.

4. Siège arrière pneumatique selon la revendication 3, **caractérisé en ce que** le plateau de dossier est divisé à environ 1/3 en un premier plateau de dossier (11a) et à environ 2/3 en un deuxième plateau de dossier (11b), lesquels peuvent être individuellement rabattus après le dégonflage des coussins pneumatiques correspondants.

5. Siège arrière pneumatique selon la revendication 4, **caractérisé en ce que**
les deux sièges latéraux (4) sont reliés par un élément de ressort (10), lequel passe également entre les deux sièges latéraux (4) et est placé dans un tube (9),
chaque siège latéral (14) est relié par un élément de ressort (18a, b) à respectivement une partie du panneau arrière (11) et les éléments de ressort (18a, b) sont placés chacun dans un tube (19a, b).

6. Siège arrière pneumatique selon la revendication 3, **caractérisé en ce qu'**une commande de soupape pneumatique est présente, laquelle permet que les coussins pneumatiques soient commandés individuellement et puissent être alimentés en pression et dégonflés individuellement par ces commandes de soupape.

7. Siège arrière pneumatique selon la revendication 3, **caractérisé en ce que** la couche (12) du dossier porte une première partie (20) et une deuxième partie (22) d'un coussin pneumatique posées et fixées de manière appropriée sur celle-ci, sachant que la première partie (20) est composée essentiellement de veines d'air verticales (21) et la deuxième partie (22) d'un coussin tissé (23), et ces dits coussins pneumatiques (20, 22) créent un contour montant vers l'avant et vers l'extérieur, de telle manière que le passager appuyé dessus peut être assis en étant tourné vers l'avant.

8. Siège arrière pneumatique selon la revendication 7, **caractérisé en ce que** le coussin de bord (13) est placé sur le coussin tissé (23) et fixé sur celui-ci de manière appropriée.

9. Siège arrière pneumatique selon la revendication 1 ou 2, **caractérisé en ce que** le panneau arrière (11) est soit réalisé en étant contouré au niveau des passages de roue et/ou porte une couche contourée (24) de mousse ou un coussin tissé contouré de la même manière, sur lesquels un coussin en veines d'air (21) est placé et fixé de manière appropriée, et ce dit coussin crée un contour montant vers l'avant et vers l'extérieur, de telle manière que le passager appuyé dessus peut être assis en étant tourné vers l'avant.

10. Siège arrière pneumatique selon la revendication 7, **caractérisé en ce que** le coussin de bord (13) est placé sur le coussin tissé (23) et fixé sur celui-ci de manière appropriée.

11. Siège arrière pneumatique selon l'une quelconque des revendications précédentes, **caractérisé en ce que** la couche (2) de mousse du dossier est remplacée au niveau des genoux d'un passager par un coussin pneumatique par un coussin tissé (16) qui présente des veines d'air (17) horizontales pour contourer le bord avant du siège arrière placées et fixées de manière appropriée, de façon à ce que des rouleaux de ceinture fixés sur le panneau arrière (11) passent, après le dégonflage du coussin tissé (16) et des veines d'air (17), dans les passages créés par ledit dégonflage et que le panneau arrière (11) puisse être totalement rabattu.

12. Siège arrière pneumatique selon la revendication 1, **caractérisé en ce que** tant le plateau de base (1) que le panneau arrière (11) peuvent être en métal, en plastique, en matériau textile, être une grille, un treillis ou des combinaisons de ceux-ci pour faire reposer et fixer la couche (2) de mousse ou le coussin pneumatique et que le plateau de base (1) et le panneau arrière (11) peuvent être formés de manière appropriée pour le maintien, l'ergonomie et/ou la fixation des coussins pneumatiques, de la mousse ou de revêtements textiles .
